# EUROPÄISCHE PATENTSCHRIFT

(11) **EP 1 043 520 B1**
(45) Veröffentlichungstag und Bekanntmachung des Hinweises auf die Patenterteilung: **18.06.2003**
(21) Anmeldenummer: 99105890.0
(22) Anmeldetag: 30.03.1999
(51) Int. Cl.: F16H 35/10

(54) **Abschaltkupplung**
Idler clutch
Découplage

(43) Veröffentlichungstag der Anmeldung: 11.10.2000
(73) Patentinhaber: Atlas Copco Electric Tools GmbH, 71364 Winnenden (DE)
(72) Erfinder: Eisenhardt, Armin, 72379 Hechingen (DE); Killinger, Albrecht, 71397 Nellmersbach (DE)
(74) Vertreter: Wasmuth, Rolf, Dipl.-Ing.

(56) Entgegenhaltungen:
- EP-A- 0 613 758
- US-A- 4 791 833

## Beschreibung

Die Erfindung betrifft eine Abschaltkupplung für mechanisch angetriebene Schraubvorrichtungen mit einstellbarem Abschaltmoment nach dem Oberbegriff des Anspruchs 1, wie durch die Schrift EP-A-0613758 offenbart.

Bekannte Abschaltkupplungen, wie sie zur Drehmomentbegrenzung von mechanisch angetriebenen, insbesondere pneumatisch angetriebene Schraubvorrichtungen eingesetzt werden, sind aufwendig in der Konstruktion und damit teuer in der Herstellung und weisen dennoch den Mangel auf, daß das voreingestellte Abschaltmoment nicht präzise reproduzierbar ist.

Der Erfindung liegt die Aufgabe zugrunde, eine Abschaltkupplung bereitzustellen, die einfach aufgebaut ist und bei der das Abschaltmoment präzise voreinstellbar und verläßlich reproduzierbar ist.

Die Aufgabe wird durch die kennzeichnenden Merkmale des Anspruchs 1 gelöst.

Mechanisch angetriebene, insbesondere pneumatisch angetriebene Schraubvorrichtungen werden im Regelfall von Motoren hoher Drehzahl angetrieben, so daß ein Untersetzungsgetriebe erforderlich ist. Dieses ist als ein- oder mehrstufiges, zweckmäßigerweise als zweistufiges Planetengetriebe ausgeführt, wobei Sonnen- und Planetenräder sich in einem Hohlrad drehen.

Die Erfindung beruht auf der Erkenntnis, daß beim Übertragen eines Drehmomentes vom Antriebsmotor zum Schraubwerkzeug in einem solchen Planetengetriebe auch ein Drehmoment zwischen Hohlrad und Getriebegehäuse übertragen wird und daß deshalb das Hohlrad drehfest mit dem Getriebegehäuse verbunden sein muß. Durch Erzeugung einer drehfesten Verbindung zwischen Hohlrad und Getriebegehäuse, die bei Überschreiten eines voreingestellten Drehmomentes selbstabschaltend ist, wird ein platzsparendes, einfaches und auch kostengünstig herzustellendes integriertes System aus Planetengetriebe und Abschaltkupplung geschaffen.

Die drehfeste Verbindung zwischen Hohlrad und Getriebegehäuse wird durch Kupplungsglieder hergestellt, die mit dem Getriebegehäuse drehfest verbunden und radial von außen mit einer voreingestellten Kraft auf das Hohlrad zugestellt sind, wobei die Verbindung zwischen Kupplungsgliedern und Hohlrad vorzugsweise durch Formschluß hergestellt ist.

Die Kupplungsglieder sind dabei ringförmig um das Hohlrad in einer Ebene senkrecht zur Getriebeachse und vorteilhaft in Umfangsrichtung äquidistant zueinander angeordnet. Um radiale Belastung des Getriebes zu vermeiden, sollte die Zahl der Kupplungsglieder größer als eins sein. Der Einfachheit halber sind zwei Kupplungsglieder vorgesehen und vorzugsweise als Kugeln ausgebildet.

Um radiale Zustellbarkeit der Kupplungsglieder bei drehfester Verbindung mit dem Getriebegehäuse zu gewährleisten, sind diese vorteilhafterweise in gehäusefesten, radial verlaufenden Nuten geführt. Zur einfachen Fertigung sind die radial verlaufenden Nuten in einem separaten Führungsring angebracht, welcher drehfest mit dem Getriebegehäuse verbunden ist. Diese drehfeste Verbindung ist über Paßstifte mit dem Lagerschild hergestellt, welcher seinerseits drehfest mit dem Getriebegehäuse verbunden ist.

Zur Herstellung des Formschlusses zwischen Kupplungsgliedern und Hohlrad sind an diesem Nocken so angebracht, daß sie mit den Kupplungsgliedern zusammenwirken. Neben der Herstellung des Formschlusses haben sie dabei die Aufgabe, durch ihre Flankenform eine radial nach außen wirkende Kraft auf die Kupplungsglieder auszuüben, so daß diese bei Überschreiten einer voreingestellten Kraft nach außen gedrückt werden und den Formschluß mit dem Hohlrad freigeben. Das Hohlrad ist dann frei drehbar und der Kraftfluß vom Antriebsmotor zum Schraubwerkzeug abgeschaltet. Durch Wahl unterschiedlicher Steilheit der in je einer Drehrichtung wirkenden Nockenflanken können unterschiedliche Abschaltmomente für beide Drehrichtungen und damit zum Anziehen und Lösen von Schraubverbindungen eingestellt werden.

Zur einfacheren Fertigbarkeit sind die Nocken an einem separaten Nockenring vorgesehen, welcher mit dem Hohlrad drehfest, vorzugsweise durch Preßpassung verbunden ist.

Die auf die Kupplungsglieder radial nach innen wirkende Vorspannkraft, welche zusammen mit der Nockenform das Abschaltmoment bestimmt, wird durch Federkraft erzeugt. Zur präzisen Einstellbarkeit und geringen Empfindlichkeit gegen Einstelltoleranzen werden Federn mit langem Federweg, insbesondere Schraubendruckfedern bevorzugt. Um das Bauvolumen gering zu halten, sind diese vorteilhafterweise koaxial um das Hohlrad angeordnet und in axiale Richtung vorgespannt. Eine vorteilhafte Ausbildung ist dabei die um das Hohlrad konzentrische Anordnung einer einzelnen Schraubendruckfeder.

Die Umlenkung der axialen Vorspannkraft in eine radial nach innen auf die Kupplungsglieder wirkende Kraft wird einfacherweise durch eine koaxial zum Getriebe angeordnete, axial bewegliche Kegelscheibe hergestellt, deren kegelförmige Innenseite unter Federkraft auf den Kupplungsgliedern aufliegt und diese nach dem Prinzip der schiefen Ebene radial nach innen drückt.

In dieser Anordnung hat bei der Einstellung des Abschaltmomentes die Reibung zwischen den Teilen nur untergeordneten Einfluß, wodurch eine hohe Reproduzierbarkeit des eingestellten Abschaltmomentes erreicht wird. Die genaue Reproduzierbarkeit des Abschaltmomentes ist konstruktiv durch Wahl der Nocken- und Kupplungsgliederform und deren Anzahl, durch Auslegung des Schrägungswinkels der Kegelscheibe und Wahl der Federkennlinie der Schraubendruckfedern gegeben. Vorzugsweise ist auch eine Feineinstellung des Abschaltmomentes durch Einstellbarkeit der Federvorspannung vorgesehen. Diese läßt sich vorteilhaft durch einen axial positionierbaren, insbesondere über ein Gewinde verstellbaren Vorspannring erreichen.

Die freie Drehbarkeit des Hohlrades im abgeschalteten Zustand wird durch eine geeignete Lagerung, insbesondere mittels eines Nadellagers auf einem Lagerschild erzeugt.

Ein im folgenden beschriebenes Ausführungsbeispiel ist in den Zeichnungen dargestellt. Es zeigen:
- Fig. 1: einen Längsschnitt durch die Einheit aus Getriebe und Abschaltkupplung,
- Fig. 2 und Fig. 3: Ansichten der Kegelscheibe,
- Fig. 4 und Fig. 5: Ansichten des Nockenrings,
- Fig. 6 und Fig. 7: Ansichten des Führungsrings mit darin angeordneten Kupplungsgliedern.

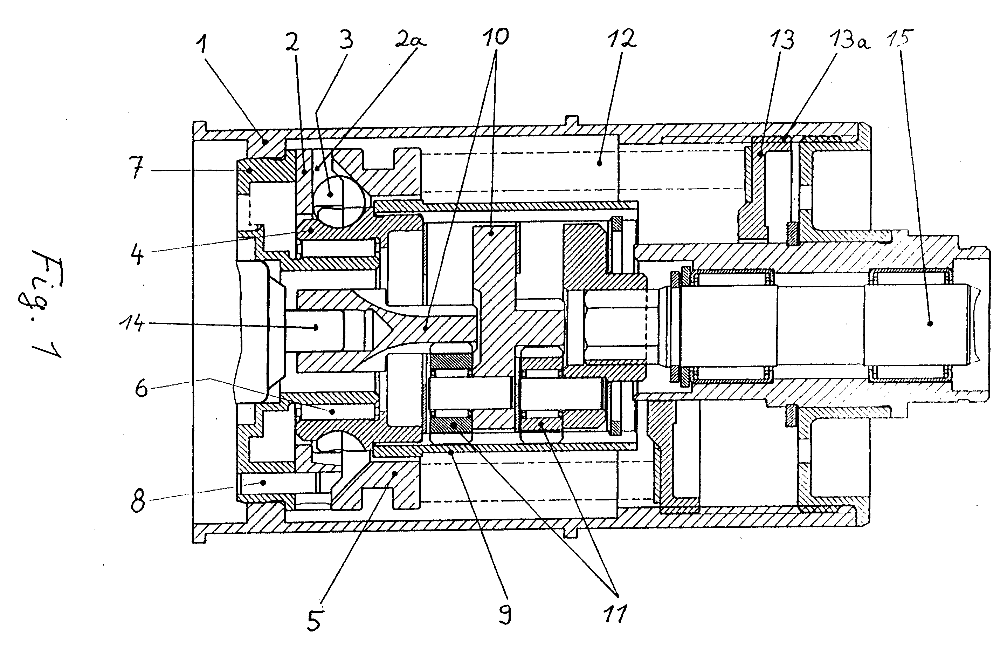

Gemäß Fig. 1 ist in einem Getriebegehäuse 1 ein Planetengetriebe zur untersetzten Momentenübertragung von der von einem Antriebsmotor angetriebenen Antriebswelle 14 zu der das Schraubwerkzeug antreibenden Abtriebswelle 15 angeordnet. Das Planetengetriebe kann ein- oder mehrstufig sein und ist gemäß Fig. 1 bevorzugt zweistufig ausgebildet. Es besteht aus einem Hohlrad 9, Sonnenrädern 10 und Planetenrädern 11. Zur Übertragbarkeit eines Drehmomentes ist das Hohlrad 9 drehfest mit dem Geriebegehäuse 1 verbunden, wobei diese drehfeste Verbindung bei Überschreitung eines voreingestellten Drehmomentes selbstabschaltend ist.

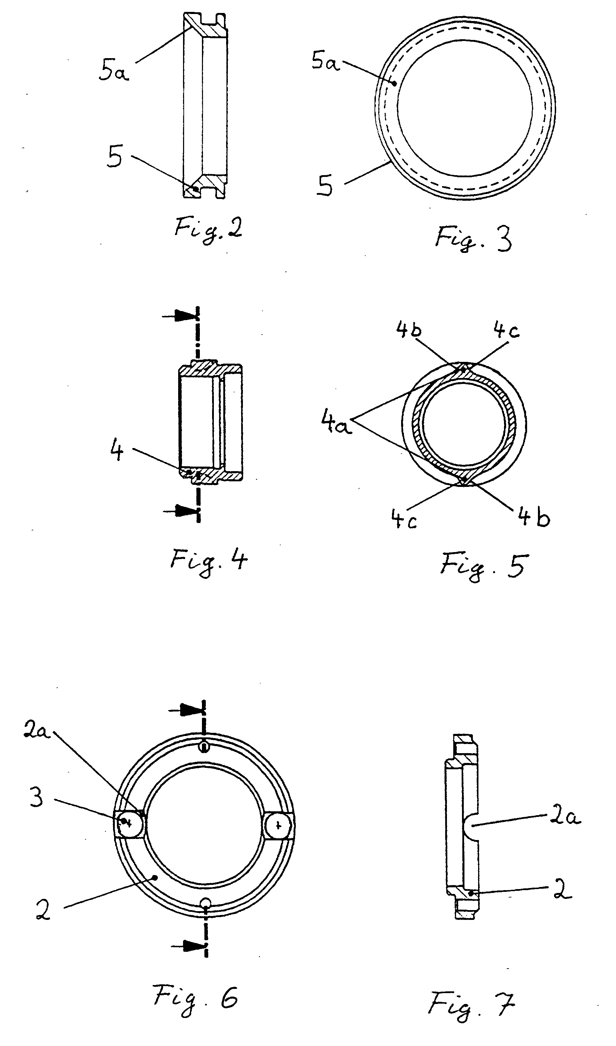

Die drehfeste Verbindung zwischen Hohlrad 9 und Getriebegehäuse 1 wird über Kupplungsglieder 3 hergestellt, die vorzugsweise mit dem Getriebegehäuse 1 drehfest verbunden sind. Sie können axial oder tangential, gemäß Fig. 1 sowie Fig. 6 und Fig. 7 aber bevorzugt radial auf das Hohlrad 9 zugestellt sein.

Die Verbindung zwischen den Kupplungsgliedern 3 und dem Hohlrad 9 kann durch Reibschluß erfolgen, ist aber im Ausführungsbeispiel bevorzugt durch Formschluß hergestellt.

Gemäß Fig. 1 sowie Fig. 6 und Fig. 7 sind die Kupplungsglieder ringförmig um das Hohlrad in einer Ebene senkrecht zur Getriebeachse und vorteilhaft in Umfangsrichtung äquidistant zueinander angeordnet. Im Ausführungsbeispiel sind bevorzugt zwei um 180° in Umfangsrichtung versetzte Kupplungsglieder 3 vorgesehen.

Die Kupplungsglieder 3 können Keil- oder Kegelform haben, sind aber vorteilhaft als Kugeln ausgebildet. Sie werden in radial verlaufenden gehäusefesten Nuten 2a geführt, wodurch radiale Zustellbarkeit und drehfeste Verbindung mit dem Getriebegehäuse 1 gewährleistet ist.

Die Nuten 2a können direkt in einen Flansch des Getriebegehäuses 1 eingebracht sein, der einfachen Fertigbarkeit halber sind sie aber in einem separaten Führungsring 2 vorgesehen, welcher mit dem Getriebegehäuse 1 drehfest verbunden ist. Der Einfachheit halber ist im Ausführungsbeispiel der Führungsring 2 über Paßstifte 8 mit dem Lagerschild 7 drehfest verbunden, welcher seinerseits drehfest mit dem Getriebegehäuse 1 verbunden ist.

Die Herstellung der in Drehrichtung formschlüssigen Verbindung zwischen Kupplungsgliedern 3 und Hohlrad 9 kann über Bohrungen in oder eine Verzahnung am Hohlrad 9 erfolgen, in die die Kupplungsglieder unter einer radial wirkenden, voreingestellten Kraft einrastend sind. Vorteilhaft sind jedoch gemäß Fig. 1 sowie Fig. 4 und Fig. 5 am Hohlrad Nocken 4a vorgesehen, die mit den Kupplungsgliedern 3 zusammenwirken. Durch unterschiedliche Gestaltung der Steilheit der in je eine Drehrichtung wirkenden Flanken 4b und 4c können unterschiedliche Abschaltmomente für beide Drehrichtungen und damit zum Anziehen und Lösen von Schraubverbindungen eingestellt werden.

Die Nocken 4a können direkt am Hohlrad 9 angebracht sein, sind aber im Ausführungsbeispiel der einfachen Fertigkeit wegen an einem separaten Nockenring 4 vorgesehen, welcher drehfest, vorzugsweise durch Preßpassung mit dem Hohlrad 9 verbunden ist.

Die auf die Kupplungsglieder 3 radial nach innen wirkende Vorspannkraft wird durch Federkraft erzeugt. Die dafür vorgesehenen Federn 12 können Teller-, Scheiben- oder Blattfedern sein. Im Ausführungsbeispiel sind jedoch nach Fig. 1 lange Schraubendruckfedern 12 wegen der präzisen Einstellbarkeit und geringen Empfindlichkeit gegen Toleranzen gewählt.

Es können mehrere Schraubendruckfedern 12 koaxial um das Hohlrad angeordnet und in axiale Richtung vorgespannt sein. Gemäß Fig. 1 ist jedoch vorteilhaft eine einzelne Schraubendruckfeder 12 konzentrisch um das Hohlrad angeordnet vorgesehen. Die Umlenkung der axialen Vorspannkraft der Schraubendruckfedern 12 in eine radial nach innen auf die Kupplungsglieder 3 wirkende Kraft erfolgt gemäß Fig. 1 sowie Fig. 2 und Fig. 3 über eine koaxial zum Getriebe angeordnete, axial bewegliche Kegelscheibe 5. Deren kegelförmige Innenflanke 5a liegt unter Federkraft auf den Kupplungsgliedern 3 auf und drückt diese nach dem Prinzip der schiefen Ebene radial nach innen.

Zur Einstellung der Federvorspannkraft ist ein axial positionierbarer Vorspannring 13 vorgesehen. Im Ausführungsbeispiel wird dieser über ein Gewinde 13a axial verstellt, wodurch die Schraubendruckfedern 12 in ihrer Vorspannung eingestellt werden.

Die drehbare Lagerung des Hohlrades 9 um den Lagerschild 7 kann über ein Gleit- oder Kugellager erfolgen. Um geringes Bauvolumen mit hoher Belastbarkeit und geringem Drehwiderstand zu kombinieren, ist zur Lagerung gemäß Fig. 1 jedoch ein Nadellager 6 vorgesehen.

## Patentansprüche

1. Abschaltkupplung für eine mechanisch angetriebene Schraubvorrichtung mit einem ein Hohlrad (9) und ein Getriebegehäuse (1) umfassenden Planetengetriebe zur im Schraubbetrieb kraftschlüssigen Verbindung zwischen einem Antriebsmotor und einem vom Antriebsmotor angetriebenen Schraubwerkzeug, und zur Abschaltung der kraftschlüssigen Verbindung zwischen Antriebsmotor und dem vom Antriebsmotor angetriebenen Schraubwerkzeug bei Überschreitung eines voreingestellten Abschaltdrehmomentes, wobei das Hohlrad (9) über Kupplungsglieder (3) der Abschaltkupplung drehmomentbegrenzend mit dem Getriebegehäuse (1) drehfest verbunden ist,
**dadurch gekennzeichnet, daß** die Kupplungsglieder (3) radial von außen mit einer voreingestellten Federkraft auf das Hohlrad (9) zugestellt sind.

2. Abschaltkupplung nach Anspruch 1,
**dadurch gekennzeichnet, daß** zwei drehfest mit dem Getriebegehäuse (1) verbundene Kupplungsglieder (3) vorgesehen sind.

3. Abschaltkupplung nach Anspruch 1 oder 2,
**dadurch gekennzeichnet, daß** das Hohlrad (9) und das Getriebegehäuse (1) durch die Abschaltkupplung in Drehrichtung miteinander formschlüssig verbunden sind.

4. Abschaltkupplung nach Anspruch 2 oder 3,
**dadurch gekennzeichnet, daß** die Kupplungsglieder (3) in einer Ebene senkrecht zur Getriebeachse ringförmig um das Hohlrad (9) angeordnet sind, vorzugsweise äquidistant zueinander liegen.

5. Abschaltkupplung nach einem der Ansprüche 2 bis 4,
**dadurch gekennzeichnet, daß** die Kupplungsglieder (3) Kugeln sind, die vorteilhaft in gehäusefesten, radial verlaufenden Nuten (2a) geführt sind, wobei die radial verlaufenden Nuten (2a) insbesondere in einem mit dem Getriebegehäuse (1) drehfest verbundenen Führungsring (2) angebracht sind, der mittels Paßstiften (8) drehfest mit einem Lagerschild (7) verbunden ist, welcher seinerseits drehfest mit dem Getriebegehäuse (1) verbunden ist.

6. Abschaltkupplung nach einem der Ansprüche 2 bis 5,
**dadurch gekennzeichnet, daß** am Hohlrad (9) mit den Kupplungsgliedern (3) zusammenwirkende Nocken (4a) angebracht sind, vorzugsweise in Form eines drehfest am Hohlrad (9) festgelegten Nockenringes (4), der mit dem Hohlrad (9) insbesondere durch Preßpassung verbunden ist.

7. Abschaltkupplung nach Anspruch 6,
**dadurch gekennzeichnet, daß** die in eine Drehrichtung wirkenden Flanken (4b bzw. 4c) der Nocken (4a) eine steilere Form haben als die in entgegengesetzter Drehrichtung wirkenden Flanken (4c bzw. 4b).

8. Abschaltkupplung nach einem der Ansprüche 2 bis 7,
**dadurch gekennzeichnet, daß** eine koaxial zum Getriebe angeordnete, axial bewegliche Kegelscheibe (5) unter Federkraft mit ihrer kegelförmigen Innenflanke (5a) auf den Kupplungsgliedern (3) aufliegt, wobei die Kegelscheibe (5) durch koaxial um das Hohlrad angeordnete vorgespannte Schraubendruckfedern (12), vorzugsweise durch eine einzelne konzentrisch zum Hohlrad angeordnete Schraubendruckfeder (12) kraftbeaufschlagt ist.

9. Abschaltkupplung nach einem der Ansprüche 2 bis 8,
**dadurch gekennzeichnet, daß** die Vorspannung der Feder (12) vorzugsweise mittels eines axial positionierbaren Vorspannrings (13) einstellbar ist, der insbesondere über ein Gewinde (13a) axial positionierbar ist.

10. Abschaltkupplung nach einem der Ansprüche 1 bis 9,
**dadurch gekennzeichnet, daß** das Planetengetriebe zweistufig ist.

## Claims

1. Cut-off clutch for a mechanically driven screwing device with a planetary gear comprising an annulus (9) and a gear housing (1) for providing a friction-locked connection between a drive motor and a screwing tool driven by the drive motor during screwing operation, and for releasing the friction-locked connection between the drive motor and the screwing tool driven by the drive motor when a pre-set cut-off torque is exceeded, the annulus (9) being fixedly joined to the gear housing (1) to rotate therewith by torque-limiting clutch elements (3) of the cut-off clutch,
**characterised in that** the clutch elements (3) are radially applied to the annulus (9) from outside with a pre-set spring force.

2. Cut-off clutch as claimed in claim 1,
**characterised in that** two clutch elements (3) are provided, fixedly joined to the gear housing (1) to rotate therewith.

3. Cut-off clutch as claimed in claim 1 or 2,
**characterised in that** the annulus (9) and the gear housing (1) are joined to one another by the cut-off clutch by means of a form-fit arrangement in the direction of rotation.

4. Cut-off clutch as claimed in claim 2 or 3,
**characterised in that** the clutch elements (3) are disposed in an annular arrangement around the annulus (9) in a plane perpendicular to the gear axis, and are preferably equidistant from one another.

5. Cut-off clutch as claimed in one of claims 2 to 4,
**characterised in that** the clutch elements (3) are balls, which are advantageously guided in radially extending grooves (2a) fixedly arranged on the housing, the radially extending grooves (2a) specifically being provided in a guide ring (3) fixedly joined to the gear housing (1) to rotate therewith, which is in turn fixedly joined by means of adjusting pins (8) to an end plate (7) and rotates therewith, which is in turn fixedly joined to the gear housing (1) to rotate therewith.

6. Cut-off clutch as claimed in one of claims 2 to 5,
**characterised in that** cams (4a) co-operating with the clutch elements (3) are provided on the annulus (9), preferably in the form of a cam ring (4) fixed on the annulus (9) so as to rotate therewith, which is joined to the annulus (9) by means of an interference-fit in particular.

7. Cut-off clutch as claimed in claim 6,
**characterised in that** the sides (4b, respectively 4c) of the cams (4a) acting in one direction of rotation are steeper in shape than the sides (4c, respectively 4b) acting in the opposite direction of rotation.

8. Cut-off clutch as claimed in one of claims 2 to 7,
**characterised in that** an axially displaceable bevel wheel (5) arranged coaxially with the gear sits with its conically shaped inner side (5a) on the clutch elements (3), the conical wheel (5) being biassed by helical compression springs (12) disposed coaxially about the annulus, force being preferably applied by means of an individual helical compression spring (12) disposed concentrically with the annulus.

9. Cut-off clutch as claimed in one of claims 2 to 8,
**characterised in that** the biassing action of the springs (12) can be adjusted, preferably by means of an axially adjustable pre-tensioning ring (13), the axial position of which can be adjusted by means of a thread (13a) in particular.

10. Cut-off clutch as claimed in one of claims 1 to 9,
**characterised in that** the planetary gear has two stages.

## Revendications

1. Dispositif de découplage pour un dispositif de vissage, entraîné mécaniquement, avec une transmission planétaire comprenant une roue creuse (9) et un boîtier de transmission (1), pour assurer la liaison par interaction de force, pendant le fonctionnement en vissage, entre un moteur d'entraînement et un outil de vissage entraîné par le moteur d'entraînement, et pour couper la liaison par interaction de force entre le moteur d'entraînement et l'outil de vissage entraîné par le moteur d'entraînement, en cas de dépassement d'un couple de désaccouplement préréglé, la roue creuse (9) étant reliée de façon assujettie en rotation au boîtier de transmission (1) avec effet de limitation du couple, par l'intermédiaire d'organes d'accouplement (3) appartenant à l'embrayage de désaccouplement, **caractérisé en ce que** les organes d'accouplement (3) sont plaqués radialement, depuis l'extérieur, sur la roue creuse (9), par une force élastique préréglée.

2. Dispositif de découplage selon la revendication 1, **caractérisé en ce que** deux organes d'accouplement (3), reliés de façon assujettie en rotation au boîtier de transmission (1), sont prévus.

3. Dispositif de découplage selon la revendication 1 ou 2, **caractérisé en ce que** la roue creuse (9) et le boîtier de transmission (1) sont reliés ensemble par une liaison à ajustement de forme, la liaison agissant dans le sens de rotation, au moyen du dispositif de découplage.

4. Dispositif de découplage selon la revendication 2 ou 3, **caractérisé en ce que** les organes d'accouplement (3) sont disposés en forme d'anneau autour de la roue creuse (9), dans un plan perpendiculaire à l'axe de transmission, de préférence sont placés à distance égale les uns des autres.

5. Dispositif de découplage selon l'une des revendications 2 à 4, **caractérisé en ce que** les organes d'accouplement (3) sont des billes guidées avantageusement dans des rainures (2a) fixes par rapport au boîtier, s'étendant radialement, les rainures (2a) s'étendant radialement étant ménagées en particulier dans une bague de guidage (2) reliée de façon assujettie en rotation au boîtier de transmission (1), bague de guidage reliée, à l'aide de goupilles ajustées (8), de façon assujettie en rotation, à un flasque de palier (7), qui, de son côté, est relié de façon assujettie en rotation au boîtier de transmission (1).

6. Dispositif de découplage selon l'une des revendications 2 à 5, **caractérisé en ce que** sur la roue creuse (9) sont montées des cames (4a) coopérant avec les organes d'accouplement (3), cames réalisées de préférence sous la forme d'une bague à cames (4), fixée de façon assujettie en rotation sur la roue creuse (9) et reliée à la roue creuse (9), en particulier par un ajustement pressé.

7. Dispositif de découplage selon la revendication 6, **caractérisé en ce que** les flancs (4b ou 4c), agissant dans le sens de rotation, des cames (4a) ont une forme plus raide que les flancs (4c ou 4b) agissant dans le sens de rotation inverse.

8. Dispositif de découplage selon l'une des revendications 2 à 7, **caractérisé en ce qu'**un disque à surface conique (5) mobile axialement, disposé coaxialement par rapport à la transmission, repose, sous la force d'un ressort, par ses flans intérieurs (5a) coniques, sur les organes d'accouplement (3), le disque conique (5) étant sollicité par une force, coaxialement, au moyen de ressorts de compression hélicoïdaux (12) précontraints, disposés autour de la roue creuse, de préférence sollicités par des ressorts hélicoïdaux (12) élémentaires, disposés concentriquement par rapport à la roue creuse.

9. Dispositif de découplage selon l'une des revendications 2 à 8, **caractérisé en ce que** la précontrainte du ressort (12) est réglable de préférence à l'aide d'une bague de mise sous précontrainte (13) pouvant être positionnée axialement, susceptible d'être positionnée axialement, en particulier par l'intermédiaire d'un filetage (13a).

10. Dispositif de découplage selon l'une des revendications 1 à 9, **caractérisé en ce que** la transmission planétaire est à deux étages.
